# FASCICULE DE BREVET EUROPEEN

(11) **EP 0 974 941 B1**
(45) Date de publication et mention de la délivrance du brevet: **31.05.2006**
(21) Numéro de dépôt: 99401784.6
(22) Date de dépôt: 16.07.1999
(51) Int. Cl.: G07F 17/30, G11B 27/00

(54) **Système de reproduction audiovisuelle**
Audiovisuelles Wiedergabesystem
Audiovisual playback system

(30) Priorité: 22.07.1998 FR 9809352
(43) Date de publication de la demande: 26.01.2000
(73) Titulaire: TOUCHTUNES MUSIC CORPORATION, Las Vegas, NV 89104 (US)
(72) Inventeur: Nathan, Guy, 91330 Yerres (FR)
(74) Mandataire: Debay, Yves

(56) Documents cités:
- EP-A- 0 713 198
- WO-A-96/12258
- WO-A-96/15512
- US-A- 5 355 302
- US-A- 5 668 788
- US-A- 5 761 320

## Description

La présente invention concerne un système de reproduction audiovisuelle numérique intelligent déclenché par paiement de redevances.

Il est connu par la demande de brevet internationale WO 96/12257 déposée par la requérante un système de reproduction audiovisuelle numérique intelligent qui sera décrit ultérieurement. Ce système, appelé également juke-box, est habituellement placé dans un espace de loisirs tel qu'un bar. Le gérant du bar, qui loue le système de reproduction audiovisuelle à un opérateur, a accès à des fonctions de réglages des paramètres physiques, mais également à un mode de gestion, par l'intermédiaire d'un écran tactile et d'une interface graphique. Cet écran et cette interface lui permettent de commander, via un réseau de distribution de données audiovisuelles et un serveur central, des sélections musicales qui seront téléchargées sur le système de reproduction audiovisuelle par un serveur central du centre de téléchargement. L'opérateur a également accès aux fonctions de configuration du système de reproduction et peut également commander des sélections musicales téléchargeables. Les clients sélectionnent les chansons grâce à l'écran tactile associé à l'interface graphique. Ce système, bien que très performant en ce qui concerne la reproduction de son et d'images, nécessite une certaine aptitude pour régler les paramètres physiques et nécessite des déplacements fréquents de l'opérateur. De plus, toutes les capacités du système ne sont pas exploitées.

Les brevets WO96/15512 et WO96/12258 décrivent d'autres réalisations de système de reproduction audiovisuelle.

La présente invention a donc pour objet de pallier les inconvénients de l'art antérieur en proposant un système de reproduction audiovisuelle fournissant de nombreuses fonctions permettant, notamment d'augmenter l'interactivité entre le système de reproduction audiovisuelle et les différents types d'utilisateurs, et de simplifier son utilisation.

Dans un premier but, la présente invention propose une fonction de gestion du volume du son généré par les haut-parleurs.

Ce but est atteint par le fait que le système de reproduction audiovisuelle comprenant une unité centrale gérant un circuit de commande de son, et un modem de télécommunication relié à un réseau de distribution commandé par un serveur central, par l'intermédiaire d'un système d'exploitation multitâche élaboré autour d'une librairie d'outils et de services est caractérisé en ce qu'il comprend une fonction agissant sur le circuit de commande du son pour réaliser un couplage du volume entre différentes zones d'utilisation des haut-parleurs du système de reproduction audiovisuelle, cette fonction étant accessible par un mode de gestion du système d'exploitation multitâche, le couplage permettant de conserver, lorsque le volume d'une zone est modifié, les rapports entre les différents niveaux de volumes de chaque zone.

Selon une autre particularité, le niveau du volume généré par les haut-parleurs est programmable, par l'intermédiaire d'un mode de gestion de la librairie d'outils et de services, en fonction des heures de la journée.

Selon une autre particularité, les paramètres de réglage du volume sont téléchargeables par l'intermédiaire d'une requête envoyée par le serveur central vers le modem de télécommunication du système de reproduction audiovisuelle.

Dans un deuxième but, la présente invention propose de faciliter le travail des opérateurs.

Ce deuxième but est atteint par le fait que le système de reproduction audiovisuelle comprenant une unité centrale gérant des moyens de visualisation, un écran tactile, des moyens de mémorisation et un modem de télécommunication relié à un réseau de distribution contrôlé par un serveur central, par l'intermédiaire d'un système d'exploitation multitâche comprenant une librairie d'outils et de services, est caractérisé en ce que le système d'exploitation du système de reproduction envoie automatiquement vers le serveur central une requête demandant le téléchargement d'au moins une chanson déterminée, chaque chanson étant déterminée en fonction des réponses à un questionnaire, qui est mémorisé dans un fichier des moyens de mémorisation du système, pour être affiché par les moyens de visualisation en temps utile et auquel les utilisateurs répondent par l'intermédiaire d'actions sur l'écran tactile.

Selon une autre particularité, le système de reproduction ou l'opérateur téléchargent une liste de chansons sur le serveur central via le réseau de distribution d'informations, le serveur central téléchargeant alors dans les moyens de mémorisation d'un système de reproduction audiovisuelle déterminé, via le même réseau de distribution, les chansons de la liste établie par l'opérateur.

Selon une autre particularité, un ordre est transmis à au moins un système de reproduction déterminé via un fichier téléchargé sur le système de reproduction par le serveur central, cet ordre étant mémorisé par le système de reproduction et exploité pour diffuser à un ou des instants déterminés, une ou plusieurs chansons déterminées.

Dans un troisième but, la présente invention propose de créer une interactivité entre l'utilisateur et le système de reproduction audiovisuelle.

Ce troisième but est atteint par le fait le système de reproduction comprenant une unité centrale commandant des moyens de visualisation, un écran tactile, des moyens de mémorisation, et un modem de télécommunication, par l'intermédiaire d'un système d'exploitation multitâche comprenant une librairie d'outils et de services, est caractérisé en ce qu'au moins une image ou animation décrivant au moins une manifestation artistique à venir à proximité du lieu d'implantation du système de reproduction audiovisuelle, est préalablement téléchargée dans un fichier du système de reproduction dont le système d'exploitation déclenche à intervalles réguliers déterminés ou, après avoir effectué une sélection musicale d'une oeuvre de l'artiste participant à la manifestation artistique, la lecture de ce fichier pour que les moyens de visualisation du système de reproduction audiovisuelle soient utilisés pour diffuser la ou les images et/ou la ou les animations mémorisées dans le fichier.

Selon une autre particularité, les moyens de visualisation affichent un écran permettant aux utilisateurs du système de reproduction audiovisuelle, par les moyens de télécommunication, de commander des droits d'entrée correspondant aux manifestations artistiques diffusées sur les moyens de visualisation, le paiement de ces droits d'entrée s'effectuant par les moyens de paiement du système de reproduction audiovisuelle.

Selon une autre particularité, le système de reproduction comprend des moyens d'impression permettant de délivrer les droits d'entrée correspondant aux manifestations artistiques diffusées ou des moyens de matérialisation sur un objet portable électronique des droits d'entrée sur les moyens de visualisation.

Selon une autre particularité, les moyens de visualisation d'un écran permettent, par l'intermédiaire d'un fichier du système d'exploitation du système de reproduction, l'affichage sur les moyens de visualisation d'un écran comportant un message invitant l'utilisateur à répondre à une série de questions en effleurant l'écran tactile, les réponses aux questions étant ensuite mémorisées dans un fichier mémorisé dans les moyens de mémorisation en vue d'une émission ultérieure vers le centre de téléchargement pour exploitation.

Selon une autre particularité, l'affichage de la série de questions est déclenché après la sélection d'une chanson déterminée ou en fonction du nombre de sélections effectuées par l'utilisateur.

Selon une autre particularité, les informations concernant chaque image et/ou animation sont mémorisées dans un fichier téléchargeable sur les moyens de mémorisation du système de reproduction audiovisuelle par l'intermédiaire d'une requête envoyée par le serveur central.

Selon une autre particularité, les moyens de visualisation du système de reproduction audiovisuelle sont utilisés, après qu'un nombre déterminé de sélections payantes ait été effectué, pour afficher une publicité interactive, enregistrée dans un fichier dans les moyens de mémorisation, et constituée d'un jeu permettant à l'utilisateur soit de gagner une sélection musicale, soit de répondre à un questionnaire enregistré dans les moyens de mémorisation du système, les réponses au questionnaire étant ensuite téléchargées vers le serveur central, soit encore d'obtenir des places gratuites à un évènement.

Un quatrième but de l'invention est de proposer une souplesse d'utilisation à l'opérateur.

Ce quatrième but est atteint par le fait que le système de reproduction audiovisuelle comprenant une unité centrale commandant des moyens de visualisation, des moyens de mémorisation, par l'intermédiaire d'un système d'exploitation comprenant une librairie d'outils et de services est caractérisé en ce que l'opérateur a accès à un module de la librairie d'outils et de services permettant de fournir au gérant du système de reproduction audiovisuelle, un nombre déterminé de crédits, un crédit correspondant à la redevance nécessaire pour sélectionner une chanson, le nombre de crédits étant mémorisé dans un fichier sur les moyens de mémorisation, ce fichier étant mis à jour chaque fois que le gérant utilise un crédit et chaque fois que l'opérateur fournit au moins un crédit.

Selon une autre particularité, les crédits fournis par l'opérateur sont utilisables dans une plage horaire déterminée par l'intermédiaire d'un module de programme affichant un écran spécifique de sélection des plages horaires d'utilisation des crédits de la réserve.

Selon une autre particularité, l'utilisation de la réserve de crédit est exclusivement réservée au gérant par l'intermédiaire d'un code confidentiel demandé avant la validation de chaque utilisation d'un crédit de la réserve.

Selon une autre particularité, l'opération consistant à créditer la réserve de crédits, est exclusivement réservée à l'opérateur par l'intermédiaire d'un code confidentiel demandé avant la validation de chaque opération de crédit de la réserve.

Selon une autre particularité, l'opérateur peut limiter les plages de valeurs dans lesquelles le gérant peut modifier les paramètres physiques du système de reproduction audiovisuelle.

D'autres particularités et avantages de la présente invention apparaîtront plus clairement à la lecture de la description ci-après faite en référence aux dessins annexés dans lesquels :

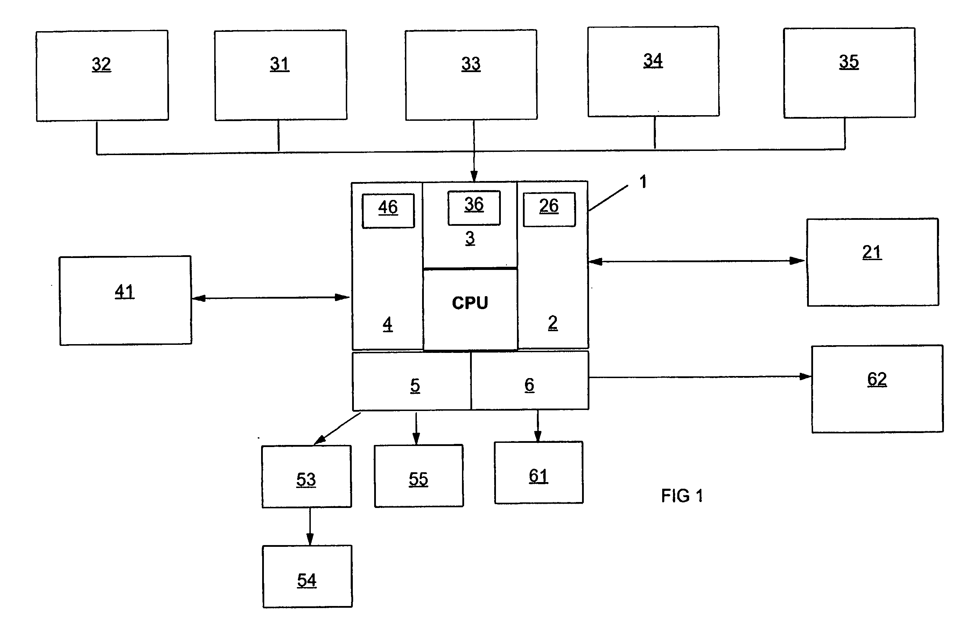

- la figure 1 représente un schéma électrique d'un système de reproduction audiovisuelle de l'art antérieur compatible avec les caractéristiques de l'invention.

Avant d'entamer la description proprement dite, il convient de définir un certain nombre d'éléments. Tout d'abord, le terme " opérateur " est utilisé dans la description pour décrire un individu ou une société qui assure l'installation et la maintenance du système de reproduction audiovisuelle. Le terme gérant " est utilisé pour décrire un individu ou une société qui loue, en général à un opérateur, le système de reproduction audiovisuelle et qui utilise le système à des fins lucratives. Enfin, le terme " utilisateur " est utilisé pour décrire un individu quelconque qui utilise le système de reproduction, loué par un gérant, à des fins de loisir.

Le système de reproduction utilisé pour l'application des caractéristiques de l'invention est celui décrit par exemple dans la demande de brevet internationale WO 96/12257 déposée par la requérante.

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'est porté sur un système du type Intel qui possède au moins des moyens de mémorisation et les caractéristiques suivantes:
- compatibilité avec le bus local Vesa,
- antémémoire du processeur: 256 kO,
- mémoire vive : RAM de 32 MO
- ports série et parallèle de haute performance,
- adaptateur graphique type SVGA à microprocesseur
- contrôleur de bus type SCSI/2,
- mémoire vive RAM statique auto-alimentée.

Toute autre unité centrale possédant des performances équivalentes ou supérieures pourra être utilisée dans l'invention.

Cette unité centrale commande et gère un circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat sans entrelacement, de type SVGA à haute résolution et faible rayonnement, c'est ce moniteur qui est utilisé pour la reproduction d'images (par exemple les couvertures d'albums des sélections musicales), de graphiques ou de clips vidéo.

Faisant partie également des moyens de mémorisation, des modules de stockage (21) utilisant des disques durs de type SCSI haute vitesse et haute capacité, sont associés aux moyens de mémorisation déjà présents dans le dispositif à microprocesseur. Ces modules servent au stockage d'informations audiovisuelles.

Un adaptateur de modem de télécommunication (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) de type synthétiseur de musique prévu pour supporter un grand nombre de sources d'entrée tout en fournissant une sortie présentant une qualité de type CD (disque compact), telle que, par exemple, l'adaptateur audio multimédia à microprocesseur, du type carte.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) qui inclut un panneau de revêtement de la vitre utilisant la "technologie avancée d'onde de surface" ainsi qu'un contrôleur de bus de type AT. Cet écran tactile permet d'afficher sur le moniteur vidéo (62) ou l'écran d'un téléviseur (61) diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface également avec le système un ensemble télécommande (31) constitué, par exemple:
- d'une télécommande infrarouge, émetteur qui possède 15 touches de commande pour le système à microprocesseur et 8 touches de commande pour le dispositif de projection.
- d'un récepteur infrarouge avec adaptateur.

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti en acier avec garnitures extérieures personnalisables.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même, un système de haut-parleurs sans fil peut être utilisé par le système.

L'ensemble (31) de commande à distance permet au gérant, par exemple de derrière le bar, d'accéder et de contrôler différentes commandes telles que :
- la commande marche/arrêt du microphone,
- la commande de mise en sourdine des haut-parleurs,
- la commande de contrôle de volume sonore,
- la commande d'annulation de la sélection musicale en train d'être écoutée.

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunication au travers du réseau de distribution. De plus, ce logiciel présente une grande flexibilité

Les données audiovisuelles numérisées et compressées sont stockées dans les moyens de mémorisation (21).

Chaque sélection est disponible selon deux formats numérisés : avec une qualité hi-fi ou une qualité CD.

Il est essentiel de noter que bien que tous les modules décrits ultérieurement semblent être utilisés d'une manière séquentielle, en réalité, les tâches spécifiques de ces modules sont exécutées simultanément dans un environnement utilisant le système d'exploitation multitâche.

Le premier module, référencé SSM, est le module de démarrage du système. Ce module ne fournit qu'un seul service. Par conséquent, il se charge automatiquement au moment de la mise sous tension du système. Si le système est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées, telles que le nom de l'établissement, l'adresse et le numéro de téléphone.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple :
- des clients qui touchent l'écran : lorsqu'un client ou un utilisateur touche l'écran, le système transfère le contrôle de sa session de premier plan au module CBSM du mode de sélection et d'exploration client,
- des requêtes d'appel serveur du réseau de télécommunication :
   lorsque le système détecte une boucle sur la ligne téléphonique, il émet une procédure asynchrone d'arrière-plan : le mode de services télécom du module TSM,
   - des requêtes concernant le commutateur de clé (32) : lorsque le gérant tourne le commutateur de clé, le système donne le contrôle de sa session de premier plan au module SMM de mode de gestion,
   - la réception d'un signal de télécommande : quand une commande est reçue, elle est traitée dans une session d'arrière-plan par le module SMM de commandes système alors que la session de premier plan reste disponible pour d'autres interventions,
   - l'apparition d'une fin de temporisation montrant l'inactivité du système : lorsque l'un des différents temporisateurs est activé, le contrôle est temporairement donné au module IRM de routines d'inactivité pour traitement.

Le système reste dans le mode "en service" jusqu'à ce que l'un des événements décrits ci-avant se produise.

Le module IRM est le module de routines d'inactivité. Ce module contient des routines réalisant des fonctions prédéterminées telles que l'affichage de la couverture d'un album, l'émission de parties de morceaux musicaux présents dans le système, la reproduction de sélections complètes à des fins promotionnelles internes, des reproductions audio à des fins promotionnelles externes, des annonces promotionnelles parlées de nouvelles sélections musicales, le repli vers une source auxiliaire à laquelle il peut être fait appel lorsque le système est en inactivité et qu'une période de temps prédéfinie mais réglable, correspondant à une temporisation, s'est écoulée.

Le module SMM est le module de commande système. Ce module permet de réaliser des fonctions qui commandent au système d'accepter une entrée demandée par un dispositif de télécommande infrarouge, ces fonctions étant instantanément traitées sans que le processus qui est en train de se dérouler soit arrêté. Un très grand nombre de telles fonctions sont possibles, seules quelques-unes sont, de manière non limitative, ci-dessous listées :
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module MMM est le module de mode de gestion. Ce module est déclenché lorsque le commutateur de clé est tourné par le gérant. L'affichage de l'écran ordinaire est remplacé par un affichage spécifique à la gestion des systèmes. Avec ce nouvel affichage, le gérant est capable de contrôler tous les réglages qui sont réalisables avec la télécommande. Il peut également prendre le contrôle de commandes de bas niveau additionnelles permettant, par exemple, de définir les commandes à valider ou à invalider sur la télécommande. Il est aussi capable de définir un maximum de hauts et bas niveaux pour chaque source de sortie du système, ces limites définissant la gamme disponible sur la télécommande. A partir de cet écran, le gérant est capable d'accéder au mode d'acquisition de nouvelles sélections en touchant un bouton repéré sur l'écran tactile. Lorsque le gérant a achevé de définir ces commandes ainsi que la configuration du système, il suffit alors qu'il enlève la clé et le système retourne automatiquement au mode "en service".

Le module NSAM est le module de mode d'acquisitions de nouvelles sélections.

Le module CBSM est le module de mode de sélection et d'exploration client. L'accès à ce module est déclenché à partir du mode "en service" lorsque le client touche l'écran. L'affichage permet à l'usager de visualiser un menu prévu pour une exploration puissante assistée par des messages vocaux numérisés pour le guider dans son choix de sélections musicales.

Le module TSM est le module de mode de services de télécommunication entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunication, automatiquement, vont s'efforcer de diminuer les contraintes sur les ressources du système et récupérer tout temps de traitement du microprocesseur laissé disponible.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner

Le module SPMM permet la gestion des sélections de musiques chansons ou vidéo mises en file d'attente par le système en vue de leur exécution dans l'ordre de sélection.

Enfin le module SMM permet la gestion du système par le gérant à l'aide de la télécommande.

Le système d'exploitation multitâche constitue l'élément essentiel pour permettre l'exécution simultanée de multiples fragments de codes et pour gérer les priorités entre les différentes tâches qui se réveillent.

Selon l'invention, lorsque le mode gestion est actionné, le réglage du volume des différentes zones peut être couplé. Cette procédure particulière est intégrée au module MMM de gestion et matérialisée sur l'écran tactile (33) par un affichage spécifique comprenant un bouton. Lorsque le gérant ou l'opérateur touche ce bouton la procédure de couplage est activée. La première opération de cette fonction consiste à lire dans un fichier mémorisé sur les moyens de mémorisation du système de reproduction, les valeurs des niveaux sonores des différentes zones et à calculer les rapports entre ces différentes valeurs. Ces rapports sont mémorisés dans un fichier stocké sur les moyens (21) de mémorisation du système de reproduction. Lorsqu'ensuite le volume d'une zone déterminée est modifié, alors de façon automatique, la procédure lit la nouvelle valeur du volume de la zone déterminée et calcule les valeurs des volumes des autres zones, de sorte que les rapports entre les valeurs des différentes zones soient identiques aux rapports des volumes préalablement calculés et mémorisés. Il est prévu que, lorsque la procédure de couplage est activée et que la valeur maximale d'un niveau sonore d'une des zones est atteinte, une nouvelle augmentation de volume d'une quelconque autre zone reste sans effet. La désactivation de la fonction de couplage s'effectue soit en touchant à nouveau le bouton d'activation, soit en touchant un autre bouton matérialisé de désactivation sur l'écran tactile.

Avantageusement, afin d'éviter des manipulations répétées pour modifier le volume, des modifications de volume sont mémorisées dans un fichier pour que, à des heures déterminées, le volume des différentes zones diminue ou augmente. Cette fonction réalisée par une routine du système d'exploitation du système de reproduction, est très utile lorsque le système de reproduction est situé, par exemple, dans un bar. En effet, le fond sonore dû à la présence de la clientèle, varie en fonction des périodes de la journée. Ce fond sonore est important aux périodes de forte affluence, c'est-à-dire en général le soir, et faible aux périodes de moindre affluence. Cette situation exige que le volume sonore du système de reproduction soit adapté en fonction du fond sonore. Ainsi, selon l'invention, il est possible de programmer à l'avance, dans un fichier, le niveau du volume en fonction des heures de la journée. La lecture ultérieure de ce fichier par la routine du système d'exploitation du système de reproduction audiovisuelle provoque alors automatiquement les modifications préprogrammées du niveau de volume.

De façon avantageuse, le fichier contenant le paramétrage du volume en fonction des heures de la journée est téléchargeable sur les moyens de mémorisation du système de reproduction audiovisuelle via le réseau de distribution de données et le modem (41) du système de reproduction, c'est-à-dire qu'il n'est pas nécessaire d'avoir accès au système de reproduction pour créer ce fichier. Celui-ci peut être élaboré sur un système informatique différent puis téléchargé sur le système de reproduction, via le réseau de distribution et le modem (41) de télécommunication.

Les systèmes de reproduction audiovisuelle de l'art antérieur permettent le téléchargement de nouvelles sélections via un réseau de distribution et un serveur central. Cependant, les commandes de nouvelles sélections doivent s'effectuer via l'écran tactile (33) et un module du système d'exploitation de chaque système de reproduction et nécessitent dans certain cas l'intervention de l'opérateur. Afin d'éviter les déplacements répétés de l'opérateur pour la commande des nouvelles sélections, le système d'exploitation possède une procédure intégrée à un module du système de reproduction permettant aux utilisateurs de choisir dans une liste, au moins une nouvelle sélection. Cette procédure consiste à déclencher la lecture du fichier stocké sur le moyen de mémorisation qui provoque l'affichage sur les moyens (62) de visualisation d'un écran spécifique. Cet écran comprend une fenêtre dans laquelle est affichée sous la forme d'un menu déroulant une liste de chansons. Cette liste correspond à des sélections qui ne sont pas encore disponibles sur le système de reproduction audiovisuelle, mais qui sont susceptibles d'être téléchargées sur le système de reproduction. Ainsi, les utilisateurs invités à sélectionner, par l'intermédiaire d'un message affiché sur l'écran, la ou les nouvelles chansons qu'ils souhaitent trouver sur le système de reproduction audiovisuelle en touchant simplement l'écran tactile (33) à l'endroit du titre de la chanson souhaitée. Les choix des utilisateurs sont mémorisés dans un fichier stocké sur les moyens de mémorisation, qui est mis à jour à chaque fois qu'un utilisateur choisit dans la liste une nouvelle sélection. Un comptage du nombre de fois où une sélection a été choisie est effectué. Ce nombre est ensuite comparé à un seuil prédéterminé. Lorsque le nombre de fois où une sélection a été choisie est supérieur au seuil prédéterminé, une requête est transmise par le système de reproduction vers le serveur central pour demander le téléchargement de la sélection. Ainsi, de nouvelles sélections sont commandées et téléchargées sans l'intervention du gérant ou de l'opérateur, ce qui simplifie considérablement l'opération de commande de nouvelles sélections.

Avantageusement, afin d'éviter le déplacement de l'opérateur pour la commande de nouvelles sélections, il est également prévu que celui-ci puisse provoquer le téléchargement de nouvelles sélections sur un système de reproduction audiovisuelle sans utiliser l'écran tactile du système de reproduction. Pour utiliser cette fonctionnalité, l'opérateur doit disposer d'un ordinateur relié au serveur central des systèmes de reproduction par un réseau de distribution de données. L'opérateur établit une liste de nouvelles sélections à télécharger et transmet alors une requête au serveur central via le réseau de distribution. Cette requête comprend la liste des nouvelles sélections à télécharger et l'identification du système de reproduction sur lequel doivent être téléchargées les nouvelles sélections. La réception de cette requête par le serveur central provoque le téléchargement des nouvelles chansons de la liste sur les moyens de mémorisation du système de reproduction correspondant à l'identification. Après la réception de ces nouvelles sélections, le système de reproduction met à jour la liste des sélections musicales disponibles. Ainsi, l'opération de commande de nouvelles sélections s'est effectuée sans déplacement de l'opérateur.

Une autre fonctionnalité du système de reproduction selon l'invention est de permettre l'exécution, à un instant déterminé, d'une chanson déterminée, simultanément sur au moins un système de reproduction déterminé. Cette fonctionnalité est utilisée, par exemple, pour la promotion d'un nouvel album ou d'un concert d'un chanteur. En effet, cette fonctionnalité permet, par exemple, de diffuser sur l'ensemble des systèmes de reproduction la chanson-titre du nouvel album d'un chanteur le jour de sa diffusion dans les magasins. Cette fonctionnalité permet également de diffuser sur les systèmes de reproduction situés à proximité du lieu d'un prochain concert d'un chanteur, une chanson de ce chanteur. L'exécution d'une chanson déterminée à un instant donné sur au moins un système de reproduction déterminé est provoquée par une série d'ordres contenus dans un fichier situé sur chaque système de reproduction audiovisuelle. Les ordres contenus dans le fichier déterminent la chanson à exécuter et le ou les moments de son exécution. Avantageusement, le fichier contenant les ordres pour l'exécution de la chanson déterminée à un instant déterminé est téléchargé sur chaque système de reproduction concerné, via le serveur central et le réseau de distribution. La lecture de ce fichier par le système de reproduction audiovisuelle provoque l'exécution des ordres contenus dans le fichier.

Le système de reproduction selon l'invention permet également de créer une interactivité avec l'utilisateur. Cette interactivité se matérialise par une série de fonctionnalités. Une première fonctionnalité consiste à utiliser les moyens (62) de visualisation pour diffuser au moins une image et/ou une animation relative à un événement artistique à venir à proximité du système de reproduction. Cet affichage permet aux utilisateurs de prendre connaissance de cet événement. Ces séquences d'images et/ou d'animations sont mémorisées dans un fichier stocké sur les moyens de mémorisation du système de reproduction. La lecture de ce fichier permet la diffusion des images et/ou des animations par l'intermédiaire, par exemple du module IRM, le module de gestion des routines d'inactivité. Avantageusement, le système de reproduction selon l'invention permet à un utilisateur de commander des droits d'entrée pour l'événement artistique décrit par les images et/ou animations visualisées sur les moyens de visualisation du système de reproduction. A cet effet, un bouton spécifique est matérialisé sur l'écran visualisant les images et/ou animations de l'événement artistique. L'effleurement de ce bouton par un utilisateur déclenche une sous routine provoquant l'affichage d'un nouvel écran. Ce nouvel écran permet à l'utilisateur de commander des droits d'entrée pour l'événement artistique. A cet effet, l'écran comprend, par exemple, les différentes dates possibles de réservation, le type de place disponible, le moyen de paiement souhaité par l'utilisateur et tout autre renseignement nécessaire pour l'établissement du droit d'entrée. Avantageusement, les moyens (35) de paiement du système de reproduction audiovisuelle sont utilisés pour le paiement des droits d'entrée. Avantageusement, le système de reproduction audiovisuelle comprend des moyens permettant la communication au serveur central ou au serveur de location, après avoir reçu son accord, l'impression des droits d'entrée. Les moyens de délivrance des droits d'entrée comprennent également ou alternativement des moyens de matérialisation des droits d'entrée sur un objet portable électronique, de type carte à puce. Ces moyens comprennent, par exemple, des moyens de lecture et d'écriture du circuit électronique de la carte à puce. Lorsqu'un utilisateur souhaite réserver un droit d'entrée, un écran l'invite à introduire sa carte dans les moyens de lecture et d'écriture. Cette action déclenche une procédure du système d'exploitation du système de reproduction qui, d'une part déclenche une nouvelle procédure d'identification de l'utilisateur de la carte, et d'autre part, après accord du serveur de location des droits d'entrées, provoque l'enregistrement du droit d'entrée sur le circuit électronique de la carte. Le fichier de mémorisation des images et/ou des animations décrivant la manifestation artistique peut être avantageusement téléchargé sur au moins un système de reproduction audiovisuelle par l'intermédiaire du serveur central et du réseau de distribution.

Une autre fonctionnalité du système de reproduction selon l'invention est de réaliser une enquête auprès des utilisateurs par l'intermédiaire d'au moins une image mémorisée dans un fichier et visualisée sur les moyens (62) de visualisation du système de reproduction audiovisuelle par l'exécution d'une procédure du système d'exploitation du système de reproduction audiovisuelle. La procédure est déclenchée dès que se produit un événement déterminé. L'image comprend une série de fenêtres. Une première fenêtre comprend, par exemple, une série de questions sur l'utilisateur, par exemple, son âge, son sexe, sa profession et/ou tout autre renseignement. Une deuxième fenêtre comprend, par exemple, une série de questions relatives à l'enquête souhaitée. Cette enquête peut être, par exemple, une enquête de satisfaction sur un artiste déterminé ou toute autre enquête. A chaque question est associée une zone de réponse déterminée de l'écran (33) tactile. Les réponses aux diverses questions s'effectuent par simple effleurement de cette zone. Les réponses aux différentes questions de l'enquête sont mémorisées dans un fichier stocké sur les moyens de mémorisation du système de reproduction audiovisuelle. Ce fichier est ensuite téléchargé sur le serveur central. Avantageusement, une sous routine du système d'exploitation vérifie si le questionnaire correspondant à l'enquête a été entièrement documenté par l'utilisateur. Dans l'affirmative, le système d'exploitation déclenche une sous routine permettant de créditer les moyens (35) de paiement d'un montant correspondant à la sélection d'une chanson, et avertit l'utilisateur par l'intermédiaire de l'affichage d'un écran spécifique qu'il a le droit de sélectionner une chanson supplémentaire. Avantageusement, la procédure d'affichage de l'écran contenant la série de questions est déclenchée par un événement prédéterminé. Cet événement est, par exemple, la sélection d'une chanson particulière, ou la sélection pour l'énième fois d'une chanson différente ou non effectuée par un même utilisateur, ce qui correspond à un montant de paiement déterminé.

Avantageusement, les moyens (62) de visualisation du système de reproduction sont utilisés pour afficher de la publicité. L'affichage de la publicité est déclenché par une sous routine du système d'exploitation contenue, par exemple, après qu'un nombre déterminé de sélections musicales payantes aient été effectuées par un utilisateur. Cette publicité, mémorisée dans un fichier stocké sur les moyens de mémorisation, apparaît sous la forme d'un jeu à l'effigie de l'entreprise, objet de la publicité. L'intéractivité de l'utilisateur avec le jeu constituant la publicité interactive s'effectue grâce aux actions de l'utilisateur sur l'écran tactile (33) du système de reproduction. Si l'utilisateur gagne le jeu, une sous routine du système d'exploitation du système de reproduction est déclenchée pour, soit créditer les moyens (35) de paiement d'un montant correspondant à la sélection d'une chanson et avertir l'utilisateur par l'intermédiaire d'un écran spécifique, qu'il a le droit de sélectionner gratuitement la sélection musicale de son choix, soit pour afficher un écran spécifique invitant l'utilisateur à répondre à un questionnaire. Le questionnaire est, par exemple, une enquête de satisfaction sur le système de reproduction audiovisuelle ou toute autre enquête du même type que décrit précédemment.

Le système de reproduction selon l'invention permet également une certaine souplesse d'utilisation pour l'opérateur. En effet, le système de reproduction audiovisuelle selon l'invention permet à l'opérateur d'offrir au gérant du système de reproduction un nombre déterminé de crédits, un crédit correspondant au montant de la redevance nécessaire pour sélectionner une chanson. Cette réserve de crédit est mémorisée dans un fichier stocké sur les moyens (21) de mémorisation du système de reproduction. Pour ajouter un crédit à la réserve, l'opérateur accède, par l'intermédiaire d'un écran spécifique, à un premier bouton spécifique. L'effleurement de l'écran tactile (33) à l'endroit de ce premier bouton déclenche une sous routine du système de reproduction qui provoque la mise à jour du fichier correspondant à la réserve de crédit en ajoutant un crédit à cette réserve. Lorsque le gérant souhaite utiliser un crédit de la réserve, il accède, par un deuxième écran spécifique, à un deuxième bouton spécifique. L'effleurement de l'écran tactile (33) à l'endroit de ce deuxième bouton provoque le déclenchement d'une sous routine du système d'exploitation qui, d'une part crédite les moyens (35) de paiement du système de reproduction d'un montant correspondant à l'acquittement du prix pour sélectionner une chanson, si la réserve de crédit n'est pas vide, et d'autre part provoque la mise à jour du fichier correspondant à la réserve de crédit en enlevant un crédit de la réserve. L'utilisation des crédits est exclusivement réservée au gérant, par l'intermédiaire d'un code requis, lors de l'utilisation du deuxième bouton spécifique, ou par l'intermédiaire d'une fonction particulière des moyens (31) de commande à distance. L'accès au fichier de réserve de crédits est exclusivement réservé à l'opérateur, par exemple, par l'intermédiaire d'un code demandé lors de l'utilisation du premier bouton spécifique. Ainsi, seul l'opérateur peut augmenter la réserve de crédit et seul le gérant peut utiliser cette réserve. Avantageusement, il est prévu un module de programme permettant l'affichage d'un écran spécifique pour définir les plages horaires pendant lesquelles les crédits offerts par l'opérateur sont utilisables. En dehors de ces plages déterminées, une sous routine interdit l'accès au deuxième bouton spécifique pour que le gérant ne puisse pas utiliser les crédits de la réserve.

Afin d'éviter les mauvaises manipulations par le gérant des fonctions du mode gestion du système de reproduction audiovisuelle, l'opérateur peut fixer les plages de valeurs dans lesquelles le gérant pourra modifier les paramètres physiques du système de reproduction audiovisuelle. Ces limitations sont effectuées grâce à des fonctions de bas niveau de mode de gestion du module MMM exclusivement accessible, par un écran spécifique verrouillé, par exemple, par l'intermédiaire d'un code connu uniquement de l'opérateur. Grâce à ces limitations, le gérant ne risque plus de dérégler totalement le système de reproduction, ainsi les interventions de l'opérateur sont moins nombreuses.

Il est clair que d'autres modifications à la portée de l'homme du métier entrent dans le cadre de l'invention.

## Revendications

1. Système de reproduction audiovisuelle comprenant une unité centrale (1) gérant un circuit (5) de commande de son, et un modem de télécommunication (41) relié à un réseau de distribution commandé par un serveur central, par l'intermédiaire d'un système d'exploitation multitâche élaboré autour d'une librairie d'outils et de services, **caractérisé en ce qu'**il comprend une fonction agissant sur le circuit (5) de commande du son pour réaliser un couplage du volume entre différentes zones d'utilisation des haut-parleurs (54) du système de reproduction audiovisuelle, cette fonction étant accessible par un mode de gestion du système d'exploitation multitâche, le couplage permettant de conserver, lorsque le volume d'une zone est modifié, les rapports entre les différents niveaux de volumes de chaque zone.

2. Système de reproduction audiovisuelle selon la revendication 1 **caractérisé en ce que** le niveau du volume des haut-parleurs (54) est programmable, par l'intermédiaire d'un mode de gestion de la librairie d'outils et de services, en fonction des heures de la journée.

3. Système de reproduction audiovisuelle selon la revendication 1 ou 2, **caractérisé en ce que** les paramètres de réglage du volume sont téléchargeables par l'intermédiaire d'une requête envoyée par le serveur central vers le modem de télécommunication (41) du système de reproduction audiovisuelle.

4. Système de reproduction audiovisuelle selon la revendication 1, l'unité centrale (1) gérant des moyens de visualisation (62), un écran tactile (33), des moyens (21) de mémorisation et le modem de télécommunication (41), par l'intermédiaire d'un système d'exploitation multitâche comprenant une librairie d'outils et de services, le système d'exploitation du système de reproduction envoyant automatiquement vers le serveur central une requête demandant le téléchargement d'au moins une chanson déterminée, chaque chanson étant déterminée en fonction des réponses à un questionnaire qui est mémorisé dans les moyens (21) de mémorisation du système pour être affiché par les moyens de visualisation (62) en temps utile et auquel les utilisateurs répondent par l'intermédiaire d'actions sur l'écran tactile (33).

5. Système de reproduction audiovisuelle selon la revendication 4, **caractérisé en ce qu'**un opérateur ou le système de reproduction téléchargent une liste de chansons sur le serveur central, via le réseau de distribution d'informations, le serveur central téléchargeant alors dans les moyens de mémorisation du système de reproduction audiovisuelle déterminé, via le même réseau de distribution, les chansons de la liste établie par l'opérateur.

6. Système de reproduction audiovisuelle selon la revendication 4 ou 5, **caractérisé en ce qu'**un ordre est transmis à au moins un système de reproduction déterminé via un fichier téléchargé sur le système de reproduction par le serveur central, cet ordre étant mémorisé par le système de reproduction et exploité pour diffuser à un ou des instants déterminés, une ou plusieurs chansons déterminées.

7. Système de reproduction audiovisuelle selon la revendication 1, l'unité centrale (1) commandant des moyens de visualisation (62), un écran tactile (33), des moyens de mémorisation (21), et le modem de télécommunication (41), par l'intermédiaire d'un système d'exploitation multitâche comprenant une librairie d'outils et de services, au moins une image ou animation décrivant au moins une manifestation artistique à venir à proximité du lieu d'implantation du système de reproduction audiovisuelle étant préalablement téléchargée dans un fichier du système de reproduction dont le système d'exploitation déclenche à intervalles réguliers déterminés ou, après avoir effectué une sélection musicale d'une oeuvre de l'artiste participant à la manifestation artistique, la lecture de ce fichier pour que les moyens de visualisation (62) du système de reproduction audiovisuelle soient utilisés pour diffuser la ou les images et/ou la ou les animations mémorisées dans le fichier.

8. Système de reproduction audiovisuelle selon la revendication 7, **caractérisé en ce que** les moyens de visualisation (62) affichent un écran permettant aux utilisateurs du système de reproduction audiovisuelle, par les moyens de télécommunication (41), de commander des droits d'entrée correspondant aux manifestations artistiques diffusées sur les moyens de visualisation, le paiement de ces droits d'entrée s'effectuant par des moyens (35) de paiement du système de reproduction audiovisuelle.

9. Système de reproduction audiovisuelle selon la revendication 7 ou 8, **caractérisé en ce qu'**il comprend des moyens d'impression permettant de délivrer les droits d'entrée correspondant aux manifestations artistiques diffusées ou des moyens de matérialisation sur un objet portable électronique des droits d'entrée sur les moyens de visualisation.

10. Système de reproduction audiovisuelle selon l'une des revendications 7 à 9, **caractérisé en ce que** les moyens de visualisation (62) d'un écran permettent, par l'intermédiaire d'un fichier du système d'exploitation du système de reproduction, l'affichage sur les moyens (62) de visualisation, d'un écran comportant un message invitant l'utilisateur à répondre à une série de questions en effleurant l'écran tactile, les réponses aux questions étant ensuite mémorisées dans un fichier mémorisé dans les moyens de mémorisation en vue d'une émission ultérieure vers le centre de téléchargement pour exploitation.

11. Système de reproduction audiovisuelle selon la revendication 10, **caractérisé en ce que** l'affichage de la série de questions est déclenché après la sélection d'une chanson déterminée ou en fonction du nombre de sélections effectuées par l'utilisateur.

12. Système de reproduction audiovisuelle selon l'une des revendications 7 à 9, **caractérisé en ce que** les informations concernant chaque image et/ou animation sont mémorisées dans un fichier téléchargeable sur les moyens de mémorisation (21) du système de reproduction audiovisuelle par l'intermédiaire d'une requête envoyée par le serveur central.

13. Système de reproduction audiovisuelle selon l'une des revendications 7 à 12, **caractérisé en ce que** les moyens de visualisation (62) du système de reproduction audiovisuelle sont utilisés, après qu'un nombre déterminé de sélections musicales payantes aient été effectuées, pour afficher une publicité interactive, enregistrée dans un fichier dans les moyens (21) de mémorisation, et constituée d'un jeu permettant à l'utilisateur soit de gagner une sélection musicale, soit de répondre à un questionnaire enregistré dans les moyens de mémorisation du système, les réponses au questionnaire étant ensuite téléchargées vers le serveur central, soit encore d'obtenir des places gratuites à un événement.

14. Système de reproduction audiovisuelle selon la revendication 1, l'unité centrale (1) commandant des moyens de visualisation (62), des moyens de mémorisation (21), par l'intermédiaire d'un système d'exploitation comprenant une librairie d'outils et de services, et en ce que l'opérateur a accès à un module de la librairie d'outils et de services permettant de fournir au gérant du système de reproduction audiovisuelle, un nombre déterminé de crédits, un crédit correspondant à la redevance nécessaire pour sélectionner une chanson, le nombre de crédits étant mémorisés dans un fichier sur les moyens de mémorisation (21), ce fichier étant mis à jour chaque fois que le gérant utilise un crédit et chaque fois que l'opérateur fournit au moins un crédit.

15. Système de reproduction audiovisuelle selon la revendication 14, **caractérisé en ce que** les crédits fournis par l'opérateur sont utilisables dans une plage horaire déterminée par l'intermédiaire d'un module de programme affichant un écran spécifique de sélection des plages horaires d'utilisation des crédits de la réserve.

16. Système de reproduction audiovisuelle selon la revendication 14 ou 15, **caractérisé en ce que** l'utilisation de la réserve de crédit est exclusivement réservée au gérant par l'intermédiaire d'un code confidentiel demandé avant la validation de chaque utilisation d'un crédit de la réserve.

17. Système de reproduction audiovisuelle selon l'une des revendications 14 à 16, **caractérisé en ce** l'opération consistant à créditer la réserve de crédits, est exclusivement réservée à l'opérateur par l'intermédiaire d'un code confidentiel demandé avant la validation de chaque opération de crédit de la réserve.

18. Système de reproduction audiovisuelle selon l'une des revendications 1 à 15, **caractérisé en ce que** l'opérateur peut limiter les plages de valeurs dans lesquelles le gérant peut modifier les paramètres physiques du système de reproduction audiovisuelle.

## Claims

1. Audio-visual reproduction system comprising a central processing unit (1) managing a sound control circuit (5), and a telecommunication modem (41) connected to a distribution network controlled by a central server, via a multi-tasking operating system designed around a library of tools and services, **characterised in that** it comprises a function acting on the sound control circuit (5) in order to perform coupling of volume between different usage zones of the loudspeakers (54) of the audio-visual reproduction system, this function being accessible via a management mode of the multi-tasking operating system, the coupling making it possible, when the volume of a zone is modified, to preserve the ratios between the various volume levels of each zone.

2. Audio-visual reproduction system according to Claim 1 **characterised in that** the volume level of the loudspeakers (54) is programmable, via a management mode of the library of tools and services, according to the time of day.

3. Audio-visual reproduction system according to Claim 1 or 2, **characterised in that** the volume-setting parameters are downloadable by means of a request sent by the central server to the telecommunication modem (41) of the audio-visual reproduction system.

4. Audio-visual reproduction system according to Claim 1, the central processing unit (1) managing display means (62), a touch screen (33), storage means (21) and the telecommunication modem (41), via a multi-tasking operating system comprising a library of tools and services, the operating system of the reproduction system automatically sending a request to the central server, asking for the downloading of at least one given song, each song being determined according to the answers to a questionnaire that is stored in the storage means (21) of the system so as to be displayed by the display means (62) in good time, which the users answer by actions on the touch screen (33).

5. Audio-visual reproduction system according to Claim 4, **characterised in that** an operator or the reproduction system download a list of songs from the central server, via the information distribution network, the central server then uploading to the storage means of the given audio-visual reproduction system, via the same distribution network, the songs in the list made by the operator.

6. Audio-visual reproduction system according to Claim 4 or 5, **characterised in that** an order is transmitted to at least one given reproduction system via a file uploaded to the reproduction system by the central server, this order being stored by the reproduction system and being exploited in order to broadcast, at a given moment or moments, one or more given songs.

7. Audio-visual reproduction system according to Claim 1, the central processing unit (1) controlling display means (62), a touch screen (33), storage means (21) and the telecommunication modem (41), via a multi-tasking operating system comprising a library of tools and services, at least one image or animation, describing at least one forthcoming artistic event near the site of the audio-visual reproduction system, being downloaded beforehand to a file of the reproduction system, the operating system of which triggers, at given regular intervals or after having made a musical selection of a work of the artist performing at the artistic event, the reading of this file so that the display means (62) of the audio-visual reproduction system are used to broadcast the images and/or animations stored in the file.

8. Audio-visual reproduction system according to Claim 7, **characterised in that** the display means (62) display a screen allowing users of the audio-visual reproduction system, via the telecommunication means (41), to order admission fees corresponding to the artistic events broadcast on the display means, the payment of these admission fees being made by payment means (35) of the audio-visual reproduction system.

9. Audio-visual reproduction system according to Claim 7 or 8, **characterised in that** it comprises printing means making it possible to deliver the admission fees corresponding to the broadcast artistic events or means for evidencing the admission fees on the display means of an electronic portable object.

10. Audio-visual reproduction system according to one of Claims 7 to 9, **characterised in that** the display means (62) of a screen make it possible, by means of a file of the operating system of the reproduction system, to display, on the display means (62), a screen comprising a message inviting the user to answer a series of questions by touching the touch screen, the answers to the questions then being stored in a file stored in the storage means with a view to being sent later to the downloading centre for exploitation.

11. Audio-visual reproduction system according to Claim 10, **characterised in that** the display of the series of questions is triggered after the selection of a given song or as a function of the number of selections made by the user.

12. Audio-visual reproduction system according to one of Claims 7 to 9, **characterised in that** the information concerning each image and/or animation are stored in a file that can be uploaded to the storage means (21) of the audio-visual reproduction system by means of a request sent by the central server.

13. Audio-visual reproduction system according to one of Claims 7 to 12, **characterised in that** the display means (62) of the audio-visual reproduction system are used, after a given number of paid-for musical selections have been made, to display an interactive advertisement, recorded in a file in the storage means (21), and constituted by a game allowing the user either to win a musical selection, or to answer a questionnaire recorded in the storage means of the system, the answers to the questionnaire then being uploaded to the central server, or else to get free seats at an event.

14. Audio-visual reproduction system according to Claim 1, the central processing unit (1) controlling display means (62), storage means (21), via an operating system comprising a library of tools and services, and in that the operator has access to a module of the library of tools and services making it possible to provide the manager of the audio-visual reproduction system with a given number of credits, a credit corresponding to the royalty required in order to select a song, the number of credits being stored in a file on the storage means (21), this file being updated each time the manager uses a credit and each time the operator provides at least one credit.

15. Audio-visual reproduction system according to Claim 14, **characterised in that** the credits provided by the operator can be used within a given period of time via a program module displaying a specific screen for selecting periods of times for using credits in the reserve.

16. Audio-visual reproduction system according to Claim 14 or 15, **characterised in that** the use of the credit reserve is reserved exclusively for the manager by means of a confidential code requested before the validation of each use of a credit in the reserve.

17. Audio-visual reproduction system according to one of Claims 14 to 16, **characterised in that** the operation consisting in crediting the credit reserve is reserved exclusively for the operator by means a confidential code requested before the validation of each operation of credit in the reserve.

18. Audio-visual reproduction system according to one of Claims 1 to 15, **characterised in that** the operator can limit the ranges of values within which the manager can modify the physical parameters of the audio-visual reproduction system.

## Patentansprüche

1. System für die audiovisuelle Wiedergabe, mit einer Zentraleinheit (1), die eine Tonsteuereinheit (5) steuert, und einem Telekommunikationsmodem (41), das mit einem Verteilungsnetz verbunden ist, das durch einen zentralen Server über ein Multitasking-Betriebssystem gesteuert wird, das um eine Werkzeug- und Dienst-Bibliothek aufgebaut ist, **dadurch gekennzeichnet, dass** es eine Funktion umfasst, die auf die Tonsteuerschaltung (5) einwirkt, um eine Lautstärkekopplung zwischen unterschiedlichen Verwendungszonen von Lautsprechern (54) des Systems für die audiovisuelle Wiedergabe zu schaffen, wobei auf diese Funktion durch eine Steuerungsbetriebsart des Multitasking-Betriebssystems zugegriffen werden kann, wobei die Kopplung ermöglicht, bei einer Veränderung der Lautstärke einer Zone die Verhältnisse zwischen den verschiedenen Lautstärkepegeln jeder Zone beizubehalten.

2. System für die audiovisuelle Wiedergabe nach Anspruch 1, **dadurch gekennzeichnet, dass** der Lautstärkepegel der Lautsprecher (54) über eine Steuerungsbetriebsart der Werkzeug- und Dienst-Bibliothek in Abhängigkeit von der Tageszeit programmierbar ist.

3. System für die audiovisuelle Wiedergabe nach Anspruch 1 oder 2, **dadurch gekennzeichnet, dass** die Steuerungsparameter der Lautstärke über eine Anforderung, die von dem zentralen Server zu dem Telekommunikationsmodem (41) des Systems für die audiovisuelle Wiedergabe geschickt wird, fernladbar sind.

4. System für die audiovisuelle Wiedergabe nach Anspruch 1, bei dem die Zentraleinheit (1) Anzeigemittel (62), einen Berührungsschirm (33), Speichermittel (21) und das Telekommunikationsmodem (41) über ein Multitasking-Betriebssystem steuert, das eine Werkzeug- und Dienst-Bibliothek umfasst, wobei das Betriebssystem des Wiedergabesystems zu dem zentralen Server automatisch eine Anforderung sendet, die das Fernladen wenigstens eines bestimmten Liedes anfordert, wobei jedes Lied in Abhängigkeit von den Antworten auf einen Fragebogen, der in den Speichermitteln (21) des Systems gespeichert ist, bestimmt wird, um durch die Anzeigemittel (62) zu einer geeigneten Zeit angezeigt zu werden und auf den die Anwender über Einwirkungen auf den Berührungsschirm (33) antworten.

5. System für die audiovisuelle Wiedergabe nach Anspruch 4, **dadurch gekennzeichnet, dass** ein Operator oder das Wiedergabesystem eine Liste von Liedern über das Informationsverteilungsnetz in den zentralen Server fernlädt, wobei der zentrale Server dann in die Speichermittel des bestimmten Systems für die audiovisuelle Wiedergabe über dasselbe Verteilungsnetz die Lieder der Liste, die von dem Operator erstellt worden ist, fernlädt.

6. System für die audiovisuelle Wiedergabe nach Anspruch 4 oder 5, **dadurch gekennzeichnet, dass** ein Befehl an wenigstens ein bestimmtes Wiedergabesystem über eine von dem zentralen Server in das Wiedergabesystem ferngeladene Datei gesendet wird, wobei dieser Befehl von dem Wiedergabesystem gespeichert und ausgewertet wird, um zu einem oder mehreren bestimmten Zeitpunkten ein oder mehrere bestimmte Lieder zu verteilen.

7. System für die audiovisuelle Wiedergabe nach Anspruch 1, bei dem die Zentraleinheit (1) Anzeigemittel (62), einen Berührungsschirm (33), Speichermittel (21) und das Telekommunikationsmodem (41) über ein Multitasking-Betriebssystem steuert, das eine Werkzeug- und Dienst-Bibliothek enthält, wobei wenigstens ein Bild oder eine Animation, das bzw. die wenigstens eine künstlerische Veranstaltung beschreibt, die in die Nähe des Ortes kommt, an dem das System für die audiovisuelle Wiedergabe implementiert ist, im Voraus in eine Datei des Wiedergabesystems ferngeladen wird, dessen Betriebssystem in bestimmten regelmäßigen Intervallen oder nach der Ausführung einer musikalischen Auswahl eines Werkes des Künstlers, der an der künstlerischen Veranstaltung teilnimmt, das Lesen dieser Datei auslöst, damit die Anzeigemittel (62) des Systems für die audiovisuelle Wiedergabe dazu verwendet werden, das Bild oder die Bilder und/oder die Animation(en), die in der Datei gespeichert sind, zu verteilen.

8. System für die audiovisuelle Wiedergabe nach Anspruch 7, **dadurch gekennzeichnet, dass** die Anzeigemittel (62) einen Bildschirm anzeigen, der den Anwendern des Systems für die audiovisuelle Wiedergabe ermöglicht, über Telekommunikationsmittel (41) die Zugangsrechte, die den über die Anzeigemittel verteilten künstlerischen Veranstaltungen entsprechen, zu steuern, wobei die Bezahlung dieser Zugangsrechte über Zahlungsmittel (35) des Systems für die audiovisuelle Wiedergabe erfolgt.

9. System für die audiovisuelle Wiedergabe nach Anspruch 7 oder 8, **dadurch gekennzeichnet, dass** es Druckmittel, die ermöglichen, die Zugangsrechte, die den verteilten künstlerischen Veranstaltungen entsprechen, auszugeben, oder Mittel, die die auf den Anzeigemitteln vorhandenen Zugangsrechte auf einem elektronischen tragbaren Gegenstand verwirklichen, umfasst.

10. System für die audiovisuelle Wiedergabe nach einem der Ansprüche 7 bis 9, **dadurch gekennzeichnet, dass** die Anzeigemittel (62) für einen Bildschirm über eine Datei des Betriebssystems des Wiedergabesystems die Anzeige eines Bildschirms auf den Anzeigemitteln (62) ermöglichen, der eine Nachricht enthält, die den Anwender einlädt, auf eine Reihe von Fragen durch Berühren des Berührungsschirms zu antworten, wobei die Antworten auf die Fragen anschließend in einer Datei gespeichert werden, die in den Speichermitteln gespeichert ist, um sie später zu ihrer Auswertung in die Fernladezentrale zu senden.

11. System für die audiovisuelle Wiedergabe nach Anspruch 10, **dadurch gekennzeichnet, dass** die Anzeige der Reihe von Fragen ausgelöst wird, nachdem ein bestimmtes Lied ausgewählt worden ist, oder in Abhängigkeit von der Anzahl der Auswahlvorgänge, die der Anwender vorgenommen hat.

12. System für die audiovisuelle Wiedergabe nach einem der Ansprüche 7 bis 9, **dadurch gekennzeichnet, dass** die Informationen, die jedes Bild und/oder jede Animation betreffen, in einer Datei gespeichert sind, die in die Speichermittel (21) des Systems für die audiovisuelle Wiedergabe über eine von dem zentralen Server geschickte Anforderung fernladbar ist.

13. System für die audiovisuelle Wiedergabe nach einem der Ansprüche 7 bis 12, **dadurch gekennzeichnet, dass** die Anzeigemittel (62) des Systems für die audiovisuelle Wiedergabe, nachdem eine bestimmte Anzahl von gebührenpflichtigen Musikauswahlvorgängen vorgenommen worden sind, dazu verwendet werden, eine interaktive Öffentlichkeit anzuzeigen, die in eine Datei in den Speichermitteln (21) eingetragen ist und durch ein Spiel gebildet wird, das dem Anwender ermöglicht, entweder eine Musikauswahl zu gewinnen oder auf einen in die Speichermittel des Systems eingetragenen Fragebogen zu antworten, wobei die Antworten auf den Fragebogen anschließend zu dem zentralen Server ferngeladen werden, oder aber freie Plätze bei einem Ereignis zu erhalten.

14. System für die audiovisuelle Wiedergabe nach Anspruch 1, bei dem die Zentraleinheit (1) Anzeigemittel (62) und Speichermittel (21) über ein Betriebssystem steuert, das eine Werkzeug- und Dienst-Bibliothek enthält, und dass der Operator Zugriff auf ein Modul der Werkzeug- und Dienst-Bibliothek hat, das ermöglicht, an den Anwender des Systems für die audiovisuelle Wiedergabe eine bestimmte Anzahl von Krediten auszugeben, wobei ein Kredit der für die Auswahl eines Liedes notwendigen Gebühr entspricht, wobei die Anzahl der Kredite in einer Datei in den Speichermitteln (21) gespeichert ist, wobei diese Datei jedes Mal aktualisiert wird, wenn der Anwender einen Kredit nutzt, und jedes Mal, wenn der Operator wenigstens einen Kredit ausgibt.

15. System für die audiovisuelle Wiedergabe nach Anspruch 14, **dadurch gekennzeichnet, dass** die von dem Operator ausgegebenen Kredite in einem bestimmten Zeitbereich über ein Programmmodul nutzbar sind, das einen bestimmten Bildschirm für die Auswahl von Zeitbereichen der Nutzung der Kredite des Vorrats anzeigt.

16. System für die audiovisuelle Wiedergabe nach Anspruch 14 oder 15, **dadurch gekennzeichnet, dass** die Nutzung des Kreditvorrats ausschließlich dem Anwender über einen vertraulichen Code vorbehalten ist, der vor der Validierung jeder Nutzung eines Kredits des Vorrats angefordert wird.

17. System für die audiovisuelle Wiedergabe nach einem der Ansprüche 14 bis 16, **dadurch gekennzeichnet, dass** der Vorgang, der darin besteht, den Kreditvorrat gutzuschreiben, ausschließlich dem Operator über einen vertraulichen Code, der vor der Validierung jedes Kreditvorgangs des Vorrats angefordert wird, vorbehalten ist.

18. System für die audiovisuelle Wiedergabe nach einem der Ansprüche 1 bis 15, **dadurch gekennzeichnet, dass** der Operator den Bereich von Werten, in denen der Anwender die physikalischen Parameter des Systems für die audiovisuelle Wiedergabe modifizieren kann, begrenzen kann.
